# EUROPEAN PATENT SPECIFICATION

(11) **EP 3 169 498 B1**
(45) Date of publication and mention of the grant of the patent: **31.07.2019**
(21) Application number: 14790740.6
(22) Date of filing: 15.07.2014
(51) Int. Cl.: B28C 7/06, B28C 9/04, B28C 5/42, B60P 1/48, B60P 1/50, B60P 3/16

(54) **SELF LOADING MOBILE MIXER**
SELBSTLADENDER MOBILER MIXER
MÉLANGEUR MOBILE À CHARGEMENT AUTOMATIQUE

(43) Date of publication of application: 24.05.2017
(73) Proprietor: Fiori Group S.p.A., 41034 Finale Emilia (Modena) (IT)
(72) Inventor: SANTINI, Enrico, I-41124 Modena (IT); PELLICIARI, Mauro, I-41053 Maranello (Modena) (IT)
(74) Representative: Colò, Chiara
(86) International application number: PCT/IT2014/000190
(87) International publication number: WO 2016/009454

(56) References cited:
- WO-A1-2006/046438
- WO-A1-2008/119148
- DE-A1-102009 020 600
- FR-A1- 2 797 438
- US-A- 4 997 284
- US-A1- 2009 177 313

## Description

The invention relates to a self loading mobile mixer that can be used to prepare a mix, particularly but not exclusively concrete.

The mobile mixers of a known type usually comprise a drum-like container, or mixing drum, having one end provided with an opening through which water, inert materials or aggregates, and cement are introduced. There are also driving means provided to drive the drum-like container in rotation about an axis thereof so as to mix the water, inert materials and cement in order to obtain a mix, particularly concrete.

There also exist self loading mobile mixers, i.e. mixers provided with a scoop for picking up - in loose form - the dry components intended to form the mix, i.e. the inert materials and cement, and pouring them into the drum-like container. In particular, the self loading mixers pick up aggregates, such as sand and gravel, from respective piles prepared on the ground. The cement, on the other hand, is loaded with the aid of an operator, who introduces the bag of cement into the scoop and breaks it open with a blade specifically provided in the scoop.

Though self loading mixers have undoubted advantages compared to non-self loading ones, since they drastically reduce the labor required on the ground to load the dry components of the mixture into the drum-like container, they nonetheless have some drawbacks.

First of all, the piles from which the scoop of the self loading mixer picks up the aggregates are rather cumbersome, i.e. they occupy a lot of space on the ground. This can create considerable difficulties, particularly on worksites where the available space is limited, as is the case, for example, on worksites situated in urban centers or in the immediate vicinity thereof. Moreover, the piles of aggregates provided on worksites are not usually covered in the periods in which they are not used, the consequence being that the aggregates get wet if it rains. This can cause alterations, also major ones, in the properties of the final mix, which is usually sensitive to the amount of water used. In particular, in the case of concrete, it is important that the amount of water used remains within a predefined interval, which is very difficult to comply with if the sand or gravel loaded into the drum-like container is wet because of rainfall.

Furthermore, the scoop of the self loading mixer is not capable of perfectly cleaning the ground the dry components were piled on. Therefore, residues of dry components, particularly sand and gravel, remain on the ground and must be manually removed.

Another drawback that cannot be overlooked is tied to the considerable amount of cement dust released when the bag of cement is broken inside the scoop of the self loading mixer, after which the scoop containing the loose cement is raised until the cement has been poured into the mixing drum. The cement dust thus generated is highly undesirable both for the health of the operators present on the site and because of the environmental pollution it causes.

Moreover, in the self loading mixers of a known type, errors may be committed during loading of the dry components, or during the mixing or storage thereof. For example, an operator might load sand rather than gravel by mistake, or load sand dirtied with earth, or excessively damp sand. Errors of this type negatively impact the quality of the mix obtained.

Examples of prior art apparatuses for preparing mixes are disclosed in US 2009/0177313, in WO 2006/046438 and in US 4997284.

DE 102009020600 and FR 2797438 disclose a pivoting device for pivoting a container from a receiving position to an emptying position. WO 2008/119148 discloses a self loading mobile mixer in accordance with the preamble of claim 1.

One object of the invention is to improve the mixers presently used to prepare mixes, as well as the methods for preparing mixtures in a mixer. A further object is to facilitate the preparation of mixes also on worksites in which limited spaces are available for the piles of dry components. Another object is to provide a mixer that enables a mix to be prepared while maintaining the worksite in a cleaner condition than is the case with existing mixers.

A further object is to reduce the risks of environmental pollution during the preparation of mixes in the mixers.

Yet another object is to reduce the health risks for operators who work on the worksites.

A further object is to enable mixes to be prepared under better controlled conditions, so as to limit human errors and ensure the quality of the mix obtained.

In a first aspect of the invention, there is envisaged a self loading mobile mixer in accordance with claim 1.

Thanks to the invention, it is possible to considerably improve the preparation of mixes compared to traditional mixers.

First of all, the mixer is extremely versatile, since it is possible to prepare bags containing any desired dry component, or any ready-made mixture of dry components, so as to prepare mixes according to any preset recipe.

In particular, if the mix it is desired to prepare is a concrete, not only cement, sand and gravel, but also fibers, colorants or additives of any kind can be introduced into the bag.

Moreover, since the bag can contain all of the dry components of the mix in the right proportions, it is no longer necessary to prepare piles of aggregates or other dry components in a loose state. This enables worksite cleanliness to be improved. It also reduces the difficulties tied to the space occupied by such piles on worksites where there is little free space. It is in fact sufficient to transport the bags needed for work to the worksite on a day by day basis, without providing for cumbersome stocks of dry components.

If the mix to be prepared is concrete, there will be a considerable reduction in the environmental pollution tied to cement dust, as well as in the resulting health risks for the operator. In fact, the bag is opened only in the raised position, so that its contents can be immediately poured into the mixing drum. This means eliminating the operations of breaking open the bag of cement in the lowered scoop and of raising the scoop loaded with loose cement, which in prior art mixers generated considerable amounts of dust.

Moreover, producing bags with a waterproof material prevents the contents thereof from getting wet even if the bags are exposed to adverse weather. The risks that the amount of water present in the mix is excessive due to the high moisture content of the dry components are thus substantially reduced. If the bag is filled with a ready-made mixture of dry components, the risks of errors in the dosage of the individual dry components are substantially eliminated. The producer of bags filled with the ready-made mixture guarantees that the mixture has the preestablished composition, relieving both the operator working on the site and contractor who uses the mix, concrete in particular, from any responsibility tied to incorrect dosing of the dry components.

The invention can be better understood and implemented with reference to the appended drawings, which illustrate some non-limiting example embodiments thereof, wherein:
Figure 1 is a perspective view showing a self loading mobile mixer, seen from the front part;
Figure 2 is a perspective view showing the mixer of Figure 1, seen from the rear part;
Figure 3 is an enlarged view of a detail of the mixer of Figure 1, showing a lifting device;
Figure 4 is an enlarged view of a further detail of the mixer of Figure 1, showing a vibrating device;
Figure 5 is a perspective view like that of Figure 1, showing a self loading mobile mixer according to an alternative embodiment;
Figure 6 is a further perspective view of the mixer of Figure 5;
Figure 7 is an enlarged cutaway view showing a detail of the mixer of

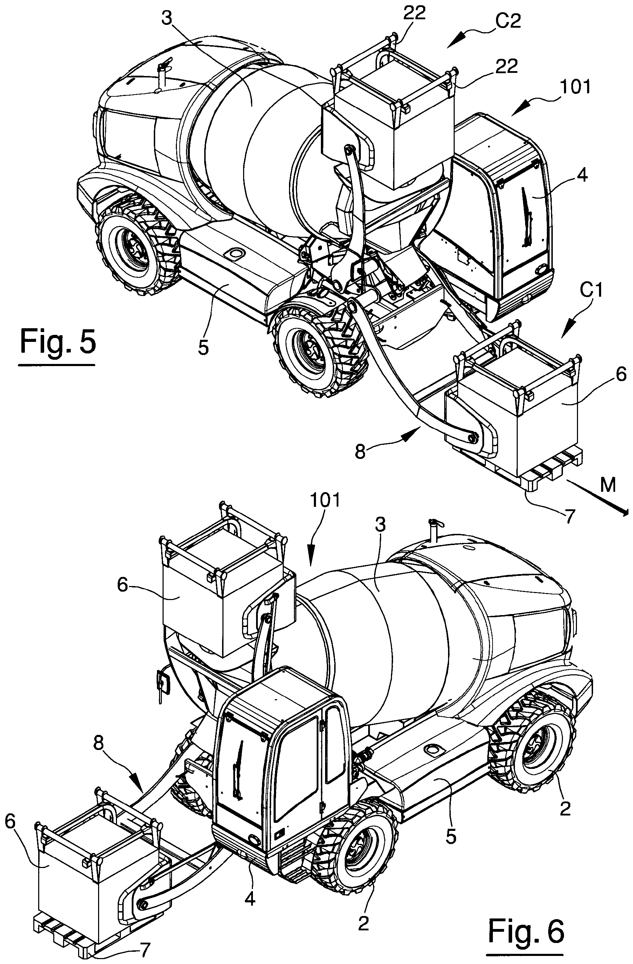

Figure 5, in which some parts have been removed for the sake of clarity of representation;

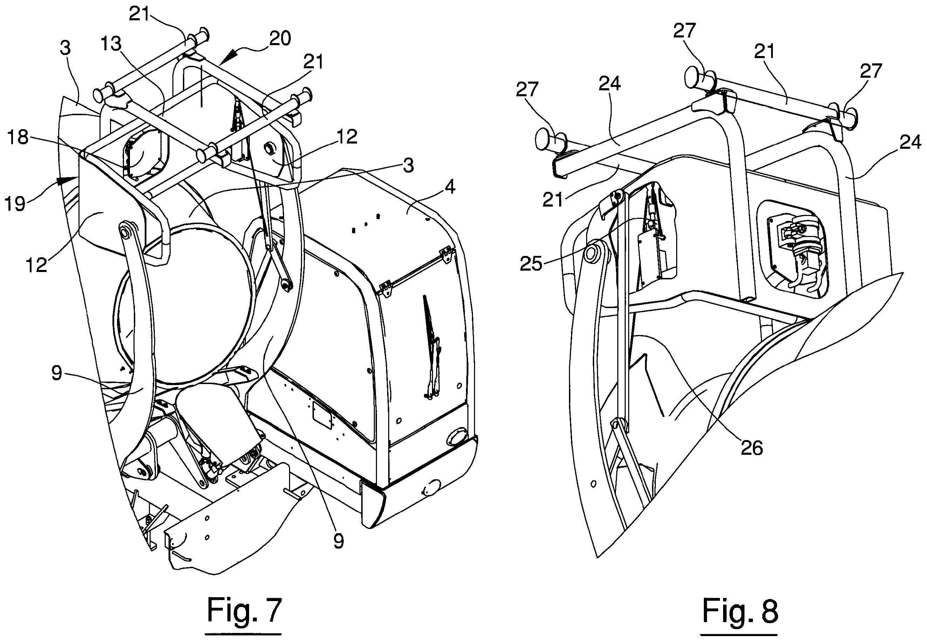

Figure 8 is an enlarged cutaway view showing a detail of a lifting device of the mixer of Figure 5;

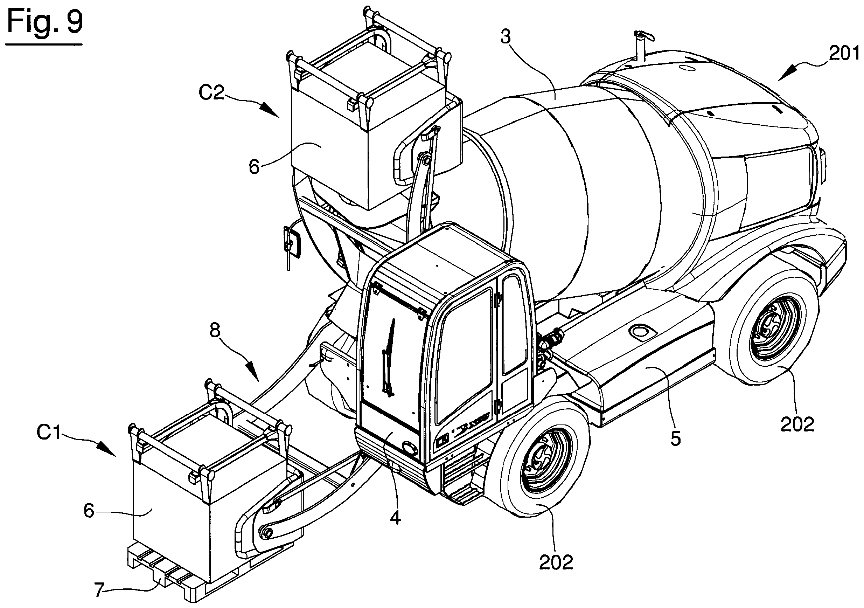

Figure 9 is a perspective view showing a self loading mobile mixer according to a further alternative embodiment;

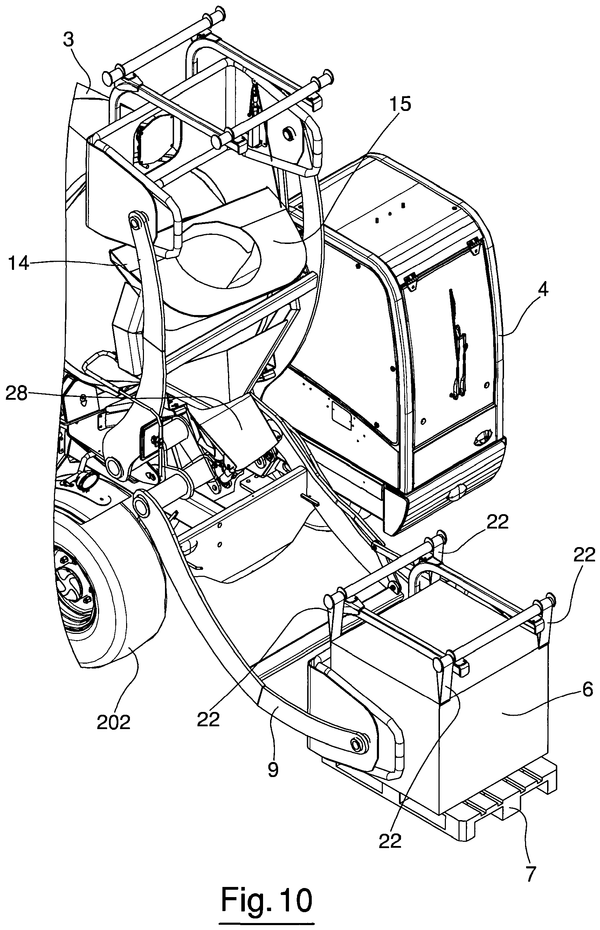

Figure 10 is an enlarged cutaway view showing a lifting device of the mixer of Figure 10.

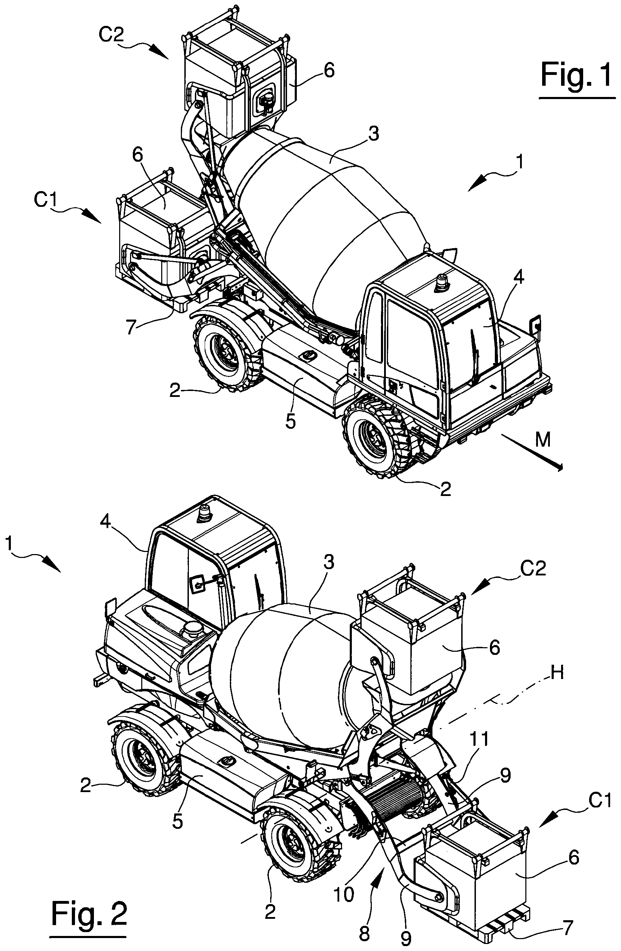

Figures 1 and 2 show a mixer 1 of a self loading mobile type.

The term "mobile" here means that the mixer 1 is capable moving by itself without being towed by external vehicles. For this purpose, the mixer 1 is provided with a plurality of wheels 2, which in the example shown are four in number, drivable by means of an engine, not illustrated. The mixer 1 further comprises a driver's post 4, configured, for example, as a cab, suitable for receiving an operator assigned to drive and maneuver the mixer 1.

In the illustrated example, the wheels 2 of the mixer 1 are endowed with deep tread tires, i.e. tires with a tread design that makes the mixer 1 particularly suitable for travel on off-road routes, for example on worksites. All four wheels 2 of the mixer 1 can be driven wheels. This makes the mixer 1 particularly suitable for traveling on irregular ground, also steeply sloping ground.

All four wheels 2 of the mixer 1 can be steered.

The mixer 1 comprises a frame which supports a mixing drum 3, i.e. a container suitable for receiving a plurality of solid and liquid ingredients and mixing them together to form a mix. The mixer 1 is particularly suitable for preparing concrete by mixing together water, inert materials and cement, with the possible addition of other liquid or solid additives. However, the mixer 1 can also be used to obtain mixes other than concrete.

The mixing drum 3 is provided at one end with an opening through which the components of the mix can be introduced into the mixing drum 3. The mix can be discharged from the mixing drum 3 through the same opening in order to be poured where desired.

The mixing drum 3 is rotatable about a longitudinal axis thereof thanks to rotation driving means, not illustrated. In this manner, the mixing drum 3 assures that the components of the mix are mixed together.

The mixer 1 comprises one or more tanks 5 suitable for being filled with one or more corresponding liquids, water in particular, and, optionally, other liquid additives, which define the liquid ingredients of the mix.

The tank 5 is in fluid communication with the mixing drum 3, for example by means of a pipe, not illustrated, in such a way that the liquid contained in the tank 5 can be sent into the mixing drum 3, particularly by actuating a specific pump.

As already mentioned previously, the mixer 1 is of the self loading type, which means that the mixer 1 is capable of autonomously loading the dry components of the mix, that is, without there being any need for an operator to manually load the aforesaid dry components.

In particular, the mixer 1 is configured to load the solid or dry components of the mix not in a loose state, but rather contained inside a bag 6.

The bag 6 can be in the form of a so-called "big bag".

The bag 6 is a flexible container, made with a film of polymeric material, provided with an upper portion of an approximately cylindrical or prismatic shape and optionally a lower funnel-shaped portion. The bag 6 is provided, in an upper region thereof, with a plurality of flexible handles 22, in particular four flexible handles 22. The bag 6 is provided with an openable lower mouth for discharging the materials contained inside the bag 6. In particular, the lower mouth of the bag 6 can be opened by pulling on a string the bag 6 is provided with.

The bag 6 contains the dry components of the mix that it is desired to prepare. According to the type of mix desired, the bag 6 can contain a single dry component, or a ready-made mixture of several dry components, already mixed and dosed in the right proportions. For example, if it is desired to prepare concrete, the bag 6 can contain cement, sand and gravel.

The mixer 1 comprises a lifting device 8 for manipulating a bag 6, the lifting device 8 being movable between a lowered position C1 and a raised position C2.

Both the lowered position C1 and the raised position C2 of the lifting device 8 are shown in Figures 1 and 2.

The lifting device 8 can be defined as a guided lifting device.

In other words, the lifting device 8 has only a certain degree of freedom between the lowered position C1 and the raised position C2. This degree of freedom corresponds to a rotation around a substantially horizontal hinge axis H.

This makes the lifting device 8 particularly simple to maneuver, even by operators who are not in possession of any particular qualifications. It is in fact possible to raise or lower the lifting device by acting upon a simple control member, such as a lever or a pushbutton, without having to carry out complicated maneuvers in space.

In the illustrated example, the lifting device 8 is positioned in a rear zone of the mixer 1, relative to a forward travel direction M of the latter. In other words, the lifting device 8 is set in a position opposite that of the driver's post 4, along a longitudinal direction of the mixer 1.

In this case one may speak of a rear loading mixer 1.

In the illustrated example, the lifting device 8 comprises a pair of arms 9 hinged to the frame of the mixer 1 on the hinge axis H.

The arms 9 can be joined to each other by one or more cross members 10.

An auxiliary arm 11 can also be present; together with an arm 9, it defines a sort of articulated quadrilateral for better controlling the positioning of the bag 6.

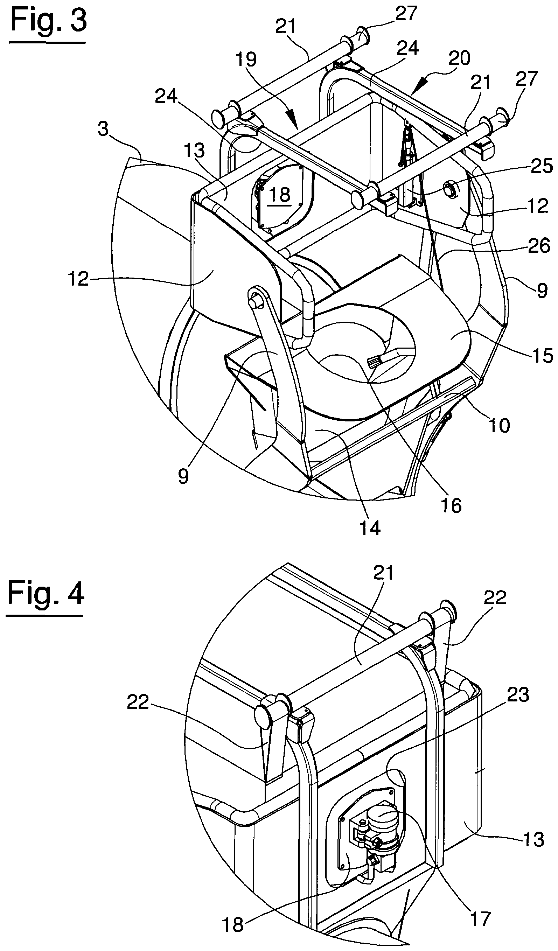

The lifting device 8 is connected to a gripping or pick-up device 20, best visible in Figure 3, designed to pick up and release the bag 6.

The pick-up device 20 can comprise a pair of bars 21, in particular parallel to each other, and having respective ends 27 in which the handles 22 of the bag 6 can be inserted. In particular, two handles 22 of the bag 6 are inserted into the two opposite ends 27 of a bar 21, whilst the other two handles 22 are inserted into the opposite ends 27 of the other bar 21.

In an unillustrated embodiment, the ends 27 can slide telescopically into the respective bar 21, in such a manner as to facilitate the detachment of the empty bag 6 from the pick-up device 20.

The bars 21 are supported by a pair of supporting members 24, shaped, for example, like an upside-down "L", each of which has a horizontal portion to which the bars 21 are fixed.

The supporting cross members 24 are in turn supported by a containment structure 19, "U"-shaped, for example, to which respective vertical portions of the supporting cross members 24 are anchored. The containment structure 19 is in turn connected to the arms 9 of the lifting device 8.

The containment structure 19 can be constructed by joining several suitably bent and shaped bars together.

The containment structure 19 can moreover comprise a plurality of containment plates to contain the bag 6, which could tend to become deformed, within a predetermined space.

In particular, two lateral containment plates 12 can be provided to contain the bag 6 in two opposite lateral zones. A central containment plate 13 can be interposed between the lateral containment plates 12 to contain the bag 6 on the side turned toward the mixing drum 3.

The arms 9 can be fixed, for example hinged, to the lateral containment plates 12.

The pick-up device 20 can be associated with a vibrating device 17, shown in Figure 4, in order to vibrate the bag 6 after it has been opened so that the bag 6 can be easily and completely emptied.

The vibrating device 17 can be fixed to the containment structure 19, in particular to the central containment plate 13.

The vibrating device 17 can be connected to a plate 18 positioned in such a way as to come into contact, during operation, with a portion of the bag 6, so as to make the latter vibrate. In particular, the plate 18 can come into contact with the bag 6 through an opening 23 made in the central containment plate 13. The plate 18 can in fact be housed inside the opening 23.

The mixer 1 can comprise an opening device for automatically opening the bag 6 when the latter has been brought by the lifting device 8 into the raised position C2.

As shown in Figure 3, the opening device can comprise an actuator 25, which, by acting for example on one or more pulleys, is capable of pulling a cable 26 that has been previously connected to the string the bag 6 is provided with. The cable 26 can be connected to the string of the bag 6 by means of a coupling element, for example a snap hook, which can be manually positioned by an operator when the bag 6 is still in the lowered position C1.

When the actuator 25 tensions the cable 26, the latter in turn pulls the string of the bag 6, whose lower mouth is consequently opened.

As shown in Figures 1 and 2, in the lowered position C1 the lifting device 8 is positioned in proximity to the ground, so that an operator can insert the handles 22 of the bag 6 into the ends 27 of the bars 21. The bag can be rested for example on a pallet 7.

In the raised position C2, as can be better seen in Figure 3, the lifting device 8 is disposed above a hopper 14 positioned in proximity to the opening of the mixing drum 3, so that the contents of the bag 6 can be poured into the mixing drum 3 through the hopper 14.

The hopper 14 can be provided with a cover element 15 having a central hole 16. The lower mouth of the bag 6 is intended to be positioned above the central hole 16, so that the latter places the bag 6 in communication with the hopper 14.

The cover element 15 serves to minimize the amount of dust that, when the bag 6 is opened and the contents poured, could be disseminated in the surrounding environment.

The mixer 1 is further provided with a discharge device for discharging the mixture prepared in the mixing drum 3 through the opening of the mixing drum 3 in a desired discharge location.

The discharge device can comprise, for example, a chute positioned in proximity to the opening of the mixing drum 3.

During operation, the operator who is in the driver's post 4 takes the mixer 1 to the place where it is desired to prepare the mix. By acting on the control member that controls the lifting device 8, the operator positions the lifting device 8 in the lowered position C1, in proximity to a bag 6 set for example on a pallet 7. In this position, the bag 6 is picked up by the pick-up device 20. For this purpose, the handles 22 of the bag 6 are, for example, manually inserted into the ends 27 of the bars 21. The cable 26 of the opening device is moreover connected to the string of the bag 6.

It is now possible to move the lifting device 8 into the raised position C2, so that the bag 6 is brought above the hopper 14. In this position, in response to a command of the operator who is driving the mixer 1, the actuator 25 can pull the cable 26 so as to open the bag 6.

The solid component, or ready-made mixture of solid components, present inside the bag 6 are thus poured into the hopper 14 and enter into the mixing drum 3. The liquid (or liquids) present in the tank (or tanks) 5 are also conveyed here.

To ensure that the liquid (or liquids) are introduced into the mixing drum 3 in the right amount, in such a manner that the proportion of the liquid components relative to the solid ones is within a predetermined interval, the mixer 1 can be provided with a device for controlling and dosing the liquid components. This device can comprise, for example, one or more flow meters.

While the mixing drum 3 is rotated around its longitudinal axis, the solid components are mixed with the liquid and the mix is thus formed; it can be subsequently discharged in the desired location through the opening of the mixing drum 3 by reversing the direction of rotation of the mixing drum 3 around the longitudinal axis thereof.

Figures 5 to 8 show a self loading mobile mixer 101 according to an alternative embodiment. The parts of the mixer 101 shared with the mixer 1 shown in Figures 1 to 4 will be indicated with the same reference numbers used previously and will not be described again in detail.

The mixer 101 differs from the mixer 1 mainly in that the lifting device 8 is positioned alongside the driver's post 4. The mixing drum 3 is rotated by 180° relative to the embodiment shown in Figures 1 to 4. The opening of the mixing drum 3 is thus turned forward relative to the direction of forward travel M of the mixer 101.

The mixer 101 is defined in this case as front loading.

The front loading position of the mixer 101 enables the operator who is in the driver's post 4 to better monitor the loading and discharge operations of the mixing drum 3.

Apart from the difference in the loading position, the lifting device 8 of the mixer 101 is wholly analogous to the one described with reference to Figures 1 to 4. In particular, the lifting device 8 is movable between a lowered position C1, in which the lifting device 8 can pick up a bag 6, particularly in the form of a "big bag", from the ground, and a raised position C2, in which the bag 6 is opened and its contents are introduced into the mixing drum 3. Subsequently, the lifting device 8 returns into the lowered position C1 to discharge the empty bag 6.

Figures 9 and 10 show a mixer 201 according to another alternative embodiment. The mixer 201 is a front-loading mixer and differs from the previously described mixer 101 mainly because it has wheels 202 provided with smooth tires rather than deep tread ones. The tires make the mixer 201 particularly suitable for road travel.

In Figure 10, a discharge device 28 for discharging the mix prepared in the mixing drum 3 is also shown.

The operation of the mixer 201, and in particular of the lifting device 8 designed to manipulate bags 6, particularly in the form of "big bags", is wholly analogous to what was previously described with reference to Figures 1 to 8.

As already mentioned previously, the bag 6 can contain a single dry component or a ready-made mixture of dry components intended to form the desired mix.

The bag 6 can contain all of the dry components of the mix, so that the mix can be prepared in the mixer by adding only the liquid components, which ensures great versatility and simplification in the preparation of the mixture.

## Claims

1. A self loading mobile mixer comprising:
- a frame;
- a plurality of wheels (2; 202) supported by the frame for moving the mixer (1; 101; 201);
- a driver's post (4) for accommodating an operator assigned to maneuver the mixer (1; 101; 201);
- a mixing drum (3) for preparing a mix by mixing at least one liquid and at least one dry component, the mixing drum (3) being rotatable about a longitudinal axis thereof thanks to rotation driving means;
- at least one tank (5) for containing said at least one liquid, said at least one tank (5) being in fluid communication with the mixing drum (3);
- a lifting device (8);
- a discharge device (28) for discharging the mix that has been prepared in the mixing drum (3) from the mixer (1; 101; 201);
**characterised in that**,
the lifting device (8) is adapted for handling a bag (6) containing said at least one dry component, the lifting device (8) being movable between a lowered position (C1) for picking up and releasing the bag (6) and a raised position (C2) in which the bag (6) is opened and its contents are poured into the mixing drum (3), the lifting device (8) being movable between the lowered position (C1) and the raised position (C2) with a movement having only a degree of freedom, consisting in a rotation around a hinge axis (H);

2. The mixer according to claim 1, wherein the hinge axis (H) is horizontal.

3. The mixer according to claim 1, wherein the lifting device (8) comprises a pair of arms (9) rotatable around the hinge axis (H).

4. The mixer according to one of the preceding claims, wherein the lifting device (8) supports a pick-up device (20) for picking up the bag (6).

5. The mixer according to claim 4, wherein the pick-up device (20) comprises a pair of elongated elements (21) having respective ends (27) suitable for being inserted into corresponding handles (22) of the bag (6).

6. The mixer according to claim 4 or 5, when claim 4 depends on claim 3, wherein the pick-up device (20) is supported by a containment structure (19) for containing the bag (6) on at least three sides of the bag (6), the arms (9) being fixed to the containment structure (19).

7. The mixer according to one of the preceding claims, and further comprising an opening device for opening the bag (6) in the raised position (C2).

8. The mixer according to claim 7, wherein the opening device comprises an actuator (25) which is connected to a cable (26) and can be actuated in the raised position (C2) so as to pull the cable (26), the cable (26) being connectable to a string of the bag (6) in order to tension the string and open the bag (6).

9. The mixer according to one of the preceding claims, further comprising a hopper (14) for receiving the contents of the bag (6), the hopper (14) communicating with the mixing drum (3).

10. The mixer according to claim 9, further comprising a cover element (15) for covering the hopper (14), the cover element (15) having a hole (16) for allowing the contents of the bag (6) to pass through.

11. The mixer according to one of the preceding claims, further comprising a vibrating device (17) designed to vibrate the bag (6) after the latter has been opened.

12. The mixer according to one of the preceding claims, wherein said plurality of wheels (2; 202) comprises four driven wheels.

13. The mixer according to one of the preceding claims, wherein said plurality of wheels (2; 202) comprises four steered wheels.

14. The mixer according to one of the preceding claims, wherein the wheels (2; 202) of said plurality are provided with tires for off-road travel.

15. The mixer according to one of the preceding claims, wherein the driver's post (4) is positioned in a front zone of the mixer (1; 101; 201), the lifting device (8) being positioned in a rear zone of the mixer (1; 101; 201), or wherein the driver's post (4) is positioned in a front zone of the mixer (1; 101; 201), the lifting device (8) being positioned in said front zone alongside the driver's post (4).

## Patentansprüche

1. Selbstladender mobiler Mischer, umfassend:
- ein Fahrgestell;
- eine Vielzahl von Rädern (2; 202), die von dem Fahrgestell getragen werden, um den Mischer (1; 101; 201) zu verfahren;
- einen Fahrerplatz (4), auf dem ein Maschinenführer zum Manövrieren des Mischers (1; 101; 201) Platz nehmen kann;
- eine Mischtrommel (3) zum Vorbereiten eines Gemischs durch Vermischen zumindest einer Flüssigkeit und zumindest einer trocknen Komponente, wobei die Mischtrommel (3) mittels Drehantriebsmitteln um ihre Längsachse drehbar ist;
- zumindest einen Tank (5) zur Aufnahme von zumindest einer Flüssigkeit, wobei der zumindest eine Tank (5) in Fluidverbindung mit der Mischtrommel (3) steht;
- eine Hubvorrichtung (8);
- eine Ausgabevorrichtung (28) zur Ausgabe des in der Mischtrommel (3) vorbereiteten Gemischs aus dem Mischer (1; 101; 201);
**dadurch gekennzeichnet, dass**
die Hubvorrichtung (8) für die Handhabung eines Sacks (6) angepasst ist, der die zumindest eine trockene Komponente enthält, wobei die Hubvorrichtung (8) beweglich ist zwischen einer abgesenkten Stellung (C1) zum Aufnehmen und Ausgeben des Sacks (6) und einer angehobenen Stellung (C2), in welcher der Sack (6) geöffnet wird und sein Inhalt in die Mischtrommel (3) geschüttet wird, wobei die Hubvorrichtung (8) zwischen der abgesenkten Stellung (C1) und der angehobenen Stellung (C2) mit einer Bewegung beweglich ist, die nur einen Freiheitsgrad aufweist und in einer Rotationsbewegung um eine Scharnierachse (H) besteht.

2. Mischer nach Anspruch 1, wobei die Scharnierachse (H) horizontal ist.

3. Mischer nach Anspruch 1, wobei die Hubvorrichtung (8) ein Paar Arme (9) umfasst, die um die Scharnierachse (H) drehbar sind.

4. Mischer nach einem der vorhergehenden Ansprüche, wobei die Hubvorrichtung (8) eine Aufnahmevorrichtung (20) zum Aufnehmen des Sacks (6) trägt.

5. Mischer nach Anspruch 4, wobei die Aufnahmevorrichtung (20) ein Paar länglicher Elemente (21) umfasst, die jeweilige Enden (27) aufweisen, die geeignet sind, in entsprechende Griffe (22) des Sacks (6) eingeführt zu werden.

6. Mischer nach Anspruch 4 oder 5, wenn Anspruch 4 von Anspruch 3 abhängig ist, wobei die Aufnahmevorrichtung (20) von einer Haltestruktur (19) unterstützt wird, die den Sack (6) auf mindestens drei Seiten des Sacks (6) umschließt, wobei die Arme (9) an der Haltestruktur (19) befestigt sind.

7. Mischer nach einem der vorhergehenden Ansprüche, und ferner umfassend eine Öffnungsvorrichtung zum Öffnen des Sacks (6) in der angehobenen Stellung (C2).

8. Mischer nach Anspruch 7, wobei die Öffnungsvorrichtung einen Stellantrieb (25) umfasst, der mit einem Seil (26) verbunden ist und in der angehobenen Stellung (C2) aktiviert werden kann, um an dem Seil (26) zu ziehen, wobei das Seil (26) mit einer Schnur des Sacks (6) verbunden werden kann, um diese Schnur anzuspannen und somit den Sack (6) zu öffnen.

9. Mischer nach einem der vorhergehenden Ansprüche, ferner umfassend einen Trichter (14) zur Aufnahme des Inhalts des Sacks (6), wobei der Trichter (14) mit der Mischtrommel (3) in Verbindung steht.

10. Mischer nach Anspruch 9, ferner umfassend ein Abdeckelement (15) zum Abdecken des Trichters (14), wobei das Abdeckelement (15) ein Loch (16) aufweist, um den Durchlass des Inhalts des Sacks (6) zu ermöglichen.

11. Mischer nach einem der vorhergehenden Ansprüche, ferner umfassend eine Rüttelvorrichtung (17), die dafür ausgelegt ist, den Sack (6) nach dessen Öffnung zu schütteln.

12. Mischer nach einem der vorhergehenden Ansprüche, wobei die Vielzahl von Rädern (2; 202) vier angetriebene Räder umfasst.

13. Mischer nach einem der vorhergehenden Ansprüche, wobei die Vielzahl von Rädern (2; 202) vier lenkbare Räder umfasst.

14. Mischer nach einem der vorhergehenden Ansprüche, wobei die Räder (2; 202) der Vielzahl von Rädern mit Reifen für Geländefahrten ausgestattet sind.

15. Mischer nach einem der vorhergehenden Ansprüche, wobei der Fahrerplatz (4) in einem vorderen Bereich des Mischers (1; 101; 201) angeordnet ist und die Hubvorrichtung (8) in einem hinteren Bereich des Mischers (1; 101; 201) angeordnet ist, oder wobei der Fahrerplatz (4) in einem vorderen Bereich des Mischers (1; 101; 201) angeordnet ist und die Hubvorrichtung (8) im vorderen Bereich neben dem Fahrerplatz (4) angeordnet ist.

## Revendications

1. Un mélangeur mobile à chargement automatique comprenant :
- un châssis ;
- une pluralité de roues (2 ; 202) supportées par le châssis pour le déplacement du mélangeur (1 ; 101 ; 201) ;
- un poste de conduite (4) pour accueillir un opérateur chargé de manoeuvrer le mélangeur (1 ; 101 ; 201) ;
- un tambour mélangeur (3) pour préparer un mélange en mélangeant au moins un liquide et au moins un composant sec, le tambour mélangeur (3) pouvant tourner autour d'un axe longitudinal respectif grâce à des moyens de mise en rotation ;
- au moins un réservoir (5) pour contenir ledit au moins un liquide, ledit au moins un réservoir (5) étant en communication de fluide avec le tambour mélangeur (3) ;
- un dispositif de levage (8) ;
- un dispositif de déchargement (28) pour décharger le mélange qui a été préparé dans le tambour mélangeur (3) du mélangeur (1 ; 101 ; 201) ;
**caractérisé en ce que**,
le dispositif de levage (8) est adapté pour manipuler un sac (6) contenant ledit au moins un composant sec, le dispositif de levage (8) étant mobile entre une position basse (C1) de prélèvement et de relâche du sac (6) et une position haute (C2) dans laquelle le sac (6) est ouvert et son contenu est versé dans le tambour mélangeur (3), le dispositif de levage (8) étant mobile entre la position basse (C1) et la position haute (C2) avec un mouvement ayant seulement un degré de liberté, consistant en une rotation autour d'un axe de pivotement (H).

2. Le mélangeur selon la revendication 1, dans lequel l'axe de pivotement (H) est horizontal.

3. Le mélangeur selon la revendication 1, dans lequel le dispositif de levage (8) comprend une paire de bras (9) pouvant tourner autour de l'axe de pivotement (H).

4. Le mélangeur selon l'une des revendications précédentes, dans lequel le dispositif de levage (8) supporte un dispositif de prélèvement (20) pour le prélèvement du sac (6).

5. Le mélangeur selon la revendication 4, dans lequel le dispositif de prélèvement (20) comprend une paire d'éléments allongés (21) ayant des extrémités respectives (27) adaptées pour être insérées dans des poignées (22) correspondantes du sac (6).

6. Le mélangeur selon la revendication 4 ou 5, lorsque la revendication 4 dépend de la revendication 3, dans lequel le dispositif de prélèvement (20) est supporté par une structure de confinement (19) pour contenir le sac (6) sur au moins trois côtés du sac (6), les bras (9) étant fixés à la structure de confinement (19).

7. Le mélangeur selon l'une des revendications précédentes, et comprenant en outre un dispositif d'ouverture pour ouvrir le sac (6) dans la position haute (C2).

8. Le mélangeur selon la revendication 7, dans lequel le dispositif d'ouverture comprend un actionneur (25) qui est relié à un câble (26) et peut être actionné dans la position haute (C2) de manière à tirer le câble (26), le câble (26) pouvant être relié à une corde du sac (6) de manière à tendre la corde et à ouvrir le sac (6).

9. Le mélangeur selon l'une des revendications précédentes, comprenant en outre une trémie (14) pour recevoir le contenu du sac (6), la trémie (14) communiquant avec le tambour mélangeur (3).

10. Le mélangeur selon la revendication 9, comprenant en outre un élément de couverture (15) pour couvrir la trémie (14), l'élément de couverture (15) ayant un trou (16) pour permettre au contenu du sac (6) de passer.

11. Le mélangeur selon l'une des revendications précédentes, comprenant en outre un dispositif vibrant (17) destiné à faire vibrer le sac (6) une fois que ce dernier a été ouvert.

12. Le mélangeur selon l'une des revendications précédentes, dans lequel ladite pluralité de roues (2 ; 202) comprend quatre roues menées.

13. Le mélangeur selon l'une des revendications précédentes, dans lequel ladite pluralité de roues (2 ; 202) comprend quatre roues directrices.

14. Le mélangeur selon l'une des revendications précédentes, dans lequel les roues (2 ; 202) de ladite pluralité sont munies de pneus pour le déplacement hors route.

15. Le mélangeur selon l'une des revendications précédentes, dans lequel le poste de conduite (4) est positionné dans une zone avant du mélangeur (1 ; 101 ; 201), le dispositif de levage (8) étant positionné dans une zone arrière du mélangeur (1 ; 101 ; 201), ou dans lequel le poste de conduite (4) est positionné dans une zone avant du mélangeur (1 ; 101 ; 201), le dispositif de levage (8) étant positionné dans ladite zone avant le long du poste de conduite (4).
